# EUROPEAN PATENT SPECIFICATION

(11) **EP 0 614 607 B1**
(45) Date of publication and mention of the grant of the patent: **01.07.1998**
(21) Application number: 94301483.7
(22) Date of filing: 02.03.1994
(51) Int. Cl.: A01N 43/54

(54) **Herbicidal composition**
Herbizide Zusammensetzung
Composition herbicide

(30) Priority: 11.03.1993 GB 9305039
(43) Date of publication of application: 14.09.1994
(73) Proprietor: ZENECA LIMITED, London W1Y 6LN (GB)
(72) Inventor: Ormrod, John Charles, Farnborough, Hampshire GU14 8PB (GB)
(74) Representative: Waterman, John Richard

(56) References cited:
- EP-A- 0 382 375

## Description

This invention relates to herbicidal treatments and compositions using a mixture of a thiocarbamate herbicide and the compound (E)-methyl 2-[2-(6-(2-cyanophenoxy)pyrimidin-4-yloxy)phenyl]-3-methoxypropenoate, (compound A) which show synergistic or other activity enhancing effects.

Many thiocarbamate herbicides are known, for example prosulfocarb, cycloate, vernolate, molinate, thiobencarb, butylate*, EPTC*, tri-allate, di-allate, esprocarb and tiocarbazil (* these compounds are preferably employed in combination with a safener such as dichlormid).

Compound A is a known compound as described in the proceedings of the Brighton Crop Protection Conference - Pests and Diseases 1992 p 435-442, and EP 382375.

The applicants have found that the application of a mixture of a thiocarbamate selected from prosulfocarb, cycloate, vernolate, molinate, thiobencarb, butylate, EPTC, tri-allate, di-allate, esprocarb and tiocarbazil, in combination with compound A produces a greater herbicidal effect against weed species than would be expected taking into account the activities of each of the compounds alone, and does not adversely affect the photoxicity towards the crop species.

According to the present invention there is provided a herbicidal preparation comprising a thiocarbamate selected from prosulfocarb, cycloate, vernolate, molinate. thiobencarb, butylate, EPTC, tri-allate, di-allate, esprocarb and tiocarbazil in combination with the compound (E)-methyl 2-[2-(6-(2-cyanophenoxy)pyrimidin-4-yloxy)phenyl]-3-methoxypropenoate.

A preferred thiocarbamate is prosulfocarb.

The preparations of the invention have useful herbicidal activity. They are capable of controlling the growth of a variety of plants including grass weeds e.g. Alopecurus myosuroides, broad-leaved weeds e.g. Galium aparine, Chenopodium album and sedges e.g. Cyperus spp, in a wide range of situations such as agriculture and horticulture, forestry and amenity. They may be used on a wide range of crops such as maize, sugar beet, rice and small grain cereals.

The compounds are preferably applied to the ground before the growing plants have germinated (pre-emergence application) or by pre-plant incorporation or by post-emergence application.

In another aspect therefore, the invention provides a process of inhibiting the growth of unwanted plants, by applying to the plants, or to the locus thereof, a thiocarbamate selected from prosulfocarb, cycloate, vernolate, molinate, thiobencarb, butylate, EPTC, tri-allate, di-allate, esprocarb and tiocarbazil, and compound A.

The rate of application required to inhibit the growth of unwanted plants will depend on, for example, the particular thiocarbamate chosen for use and the particular species of plants the composition is desired to control. However, as a general guide, an amount of from 0.1 to 8.0 kilograms preferably from 1.0 to 6.0 kilograms total active ingredient per hectare, is usually suitable. The ratio of the thiocarbamate to compound A applied is suitably in the range of from 40:1 to 1:1 preferably from 10:1 to 1:1.

The thiocarbamate and compound A are suitably administered in the form of compositions.

Further according to the present invention there is provided a herbicidal composition comprising a thiocarbamate selected from prosulfocarb, cycloate, vernolate, molinate, thiobencarb, butylate, EPTC, tri-allate, di-allate, esprocarb and tiocarbazil, compound A and a solid or liquid diluent.

A particularly preferred composition is a composition comprising prosulfocarb and compound A in combination with a solid or liquid diluent. The ratio of thiocarbamate to compound A in the composition is preferably in the range of from 10:1 to 1:1.

The composition has been found to be particularly useful in early post-emergence application in cereals.

The compositions of the invention may be solid compositions in the form of dispersible powders or grains comprising, in addition to the active ingredient, a wetting agent to facilitate the dispersion of the powder or grains in liquids. Such powders or grains may include fillers, suspending agents and the like.

Liquid compositions include solutions, dispersions and emulsions containing the active ingredient preferably in the presence of one or more surface active agents. Water or organic liquids may be used to prepare solutions, dispersions, or emulsions of the active ingredient. The liquid compositions of the invention may also contain one or more corrosion inhibitors for example lauryl isoquinolinium bromide.

Surface active agents may be of the cationic, anionic or non-ionic type. Suitable agents of the cationic type include for example quaternary ammonium compounds, for example cetyltrimethyl ammonium bromide. Suitable agents of the anionic type include for example soaps, salts of aliphatic mono-esters of sulphuric acid, for example sodium lauryl sulphate; and salts of sulphonated aromatic compounds, for example dodecylbenzene-sulphonate, sodium, calcium and ammonium lignosulphonate, butylnaphthalene sulphonate, and a mixture of the sodium salts of diisopropyl- and triisopropyl-naphthalenesulphonic acid.

Suitable agents of the non-ionic type include, for example, the condensation products of ethylene oxide with fatty alcohols such as oleyl alcohol and cetyl alcohol, or with alkyl phenols such as octyl-phenol, nonylphenol, and octylcresol. Other non-ionic agents are the partial esters derived from long chain fatty acids and hexitol anhydrides, for example sorbitol monolaurate; the condensation products of the said partial esters with ethylene oxide and the lecithins.

The compositions which are to be used in the form of aqueous solutions, dispersions or emulsions are generally supplied in the form of a concentrate containing a high proportion of the active ingredient, the concentrate being diluted with water before use. These concentrates are usually required to withstand storage for prolonged periods and after such storage to be capable of dilution with water in order to form aqueous preparations which remain homogeneous for a sufficient time to enable them to be applied by conventional spray equipment.

The compositions of the invention may contain, in addition to carriers and surface active agents, various other constituents to increase their usefulness. They may contain, for example, buffering salts to maintain the pH of the composition within a desired rage; antifreeze agents, for example urea or propylene glycol; adjuvants, for example oils and humectants; and sequestrants, for example citric acid and ethylenediaminetetracetic acid, which help to prevent the formation of insoluble precipitates when the compositions are diluted with hard water. Aqueous dispersions may contain anti-settling agents and anti-caking agents. The compositions may in general contain a dye or pigment to impart a characteristic colour. Agents for increasing viscosity may be added to reduce the formation of fine droplets during spraying, and thereby reduce spray drift. Other additives useful for particular purposes will be known to those skilled in the formation art.

In general, concentrates may conveniently contain from 10 to 90% and preferably from 25 to 90% by weight of active ingredient. Dilute preparations ready for use may contain varying amounts of the active ingredient, depending upon the purpose for which they are to be used; however, dilute preparations suitable for many uses contain between 0.01% and 1% by weight of the active ingredient.

The preparation of the invention is preferably presented in a single composition. However they may be presented in a two pack-container, one compartment of which containing a composition comprising a thiocarbamate selected from prosulfocarb, cycloate, vernolate, molinate, thiobencarb, butylate, EPTC, tri-allate, di-allate, esprocarb and tiocarbazil in combination with a solid or liquid diluent and the second compartment contains a composition comprising compound A in combination with a solid or liquid diluent.

The contents of the two compartments can then be admixed, for example by dissolving both in aqueous solution prior to administration.

The compositions of the invention may comprise, in addition to a thiocarbamate and compound A, one or more compounds which possess biological activity for example herbicides, fungicides, insecticides (optionally with an insecticide synergist) and plant growth regulators. The other herbicide will generally be a herbicide having a complementary action in the particular application.
Examples of useful complementary herbicides include:
A. benzo-2,1,3-thiadiazin-4-one-2,2-dioxides such as bentazone;
B. hormone herbicides, particularly the phenoxy alkanoic acids such as MCPA, MCPA-thioethyl, dichlorprop, 2,4,5-T, MCPB, 2,4-D, 2,4-DB, mecoprop, trichlopyr, clopyralid, and their derivatives (eg. salts, esters and amides);
C. 1,3 dimethylpyrazole derivatives such as pyrazoxyfen, pyrazolate and benzofenap;
D. Dinitrophenols and their derivatives (eg. acetates) such as dinoterb, dinoseb and its ester, dinoseb acetate;
E. dinitroaniline herbicides such as dinitramine, trifluralin, ethalflurolin, pendimethalin, oryzalin;
F. arylurea herbicides such as diuron, flumeturon, metoxuron, neburon, isoproturon, chlorotoluron, chloroxuron, linuron, monolinuron, chlorobromuron, daimuron, methabenzthiazuron;
G. phenylcarbamoyloxyphenylcarbamates such as phenmedipham and desmedipham;
H. 2-phenylpyridazin-3-ones such as chloridazon and norflurazon;
I. uracil herbicides such as lenacil, bromacil and terbacil;
J. triazine herbicides such as atrazine, simazine, aziprotryne, cyanazine, prometryn, dimethametryn, simetryne, and terbutryn;
K. phosphorothioate herbicides such as piperophos, bensulide, and butamifos;
L. triketone herbicides such as sulcotrione;
M. 1,2,4-triazin-5-one herbicides such as metamitron and metribuzin;
N. benzoic acid herbicides such as 2,3,6-TBA, dicamba and chloramben;
O. anilide herbicides such as pretilachlor, butachlor, alachlor, propachlor, propanil, metazachlor, metolachlor, acetochlor, and dimethachlor;
P. dihalobenzonitrile herbicides such as dichlobenil, bromoxynil and ioxynil;
Q. haloalkanoic herbicides such as dalapon, TCA and salts thereof;
R. diphenylether herbicides such as lactofen, fluroglycofen or salts or ester thereof, nitrofen, bifenox, aciflurofen and salts and esters thereof, oxyfluorfen, fomesafen, chlornitrofen and chlomethoxyfen;
S. phenoxyphenoxypropionate herbicides such as diclofop and esters thereof such as the methyl ester, fluazifop and esters thereof, haloxyfop and esters thereof, quizalofop and esters thereof and fenoxaprop and esters thereof such as the ethyl ester;
T. cyclohexanedione herbicides such as alloxydim and salts thereof, sethoxydim, cycloxydim, tralkoxydim, and clethodim;
U. sulfonyl urea herbicides such as chlorosulfuron, sulfometuron, metsulfuron and esters thereof, bensulfuron and esters thereof such as DPX-M6313, chlorimuron and esters such as the ethyl ester thereof, pirimisulfuron and esters such as the methyl ester thereof, 2-[3-(4-methoxy-6-methyl-1,3,5-triazin-2-yl)-3-methylureidosulphonyl) benzoic acid esters such as the methyl ester thereof (DPX-L5300) and pyrazosulfuron;
V. imidazolidinone herbicides such as imazaquin, imazamethabenz, imazapyr and isopropylammonium salts thereof, imazethapyr;
W. arylanilide herbicides such as flamprop and esters thereof, benzoylprop-ethyl, diflufenican;
X. amino acid herbicides such as glyphosate and glufosinate and their salts and esters, sulphosate and bialaphos;
Y. organoarsenical herbicides such as monosodium methanearsonate (MSMA);
Z. herbicidal amide derivative such as napropamide, propyzamide, carbetamide, tebutam, bromobutide, isoxaben, naproanilide and naptalam;
AA. miscellaneous herbicides including ethofumesate, cinmethylin, difenzoquat and salts thereof such as the methyl sulphate salt, closmazone, oxadiazon, bromofenoxim, barban, tridiphane, flurochloridone, quinclorac, dithiopyr and mefanacet;
BB. contact herbicides including bipyridylium herbicides such as those in which the active entity is paraquat and those in which the active entity is diquat.

The following example illustrates the invention.

### EXAMPLE 1

### Methods

All compounds were tested as pre-formulated products and mixtures prepared as tank mixtures. All spray solutions were applied through a track sprayer to various species as shown in Table I at a volume of 200l/ha. Each treatment was replicated four times.

**TABLE I**

| Test species | Growth stage at treatment | Species code |
|---|---|---|
| Winter Wheat cv. Prinqual | 2-3 leaves | TRZAW |
| Polygonum aviculare | 2-3 leaves | POLAV |
| Chenopodium album | 1-2 leaves | CHEAL |
| Galium aparine | 1-2 leaves | GALAP |
| Matricaria perforata | 2-3 leaves | MATIN |
| Veronica persica | 1-2 leaves | VERPE |
| Alopecurus myosuroides | 2-3 leaves | ALOMY |
| Lolium rigidum | 2-3 leaves | LOLRI |

All species were grown in compost in 77mm pots. The phytotoxicity was visually assessed at 11 DAT (crop only) and 23 DAT (crop and weeds); on a 0-100% scale where 0 = indistinguishable from control and 100 = complete kill.
The results are given in Table II.

**TABLE II**

| THIOCARBAMATE | RATE KG/HA | COMPOUND A | RATE G/HA | TRZAW | POLAV | CHEAL | GALAP | MATIN | VERPE | ALOMY | LOLRI |
|---|---|---|---|---|---|---|---|---|---|---|---|
| PROSULFOCARB | 0.25 | | - | 0 | 0 | 11 | 43 | 0 | 26 | 10 | 30 |
| | 0.5 | | - | 0 | 1 | 16 | 43 | 0 | 64 | 43 | 44 |
| | 1 | | - | 0 | 6 | 56 | 90 | 0 | 81 | 77 | 59 |
| | 2 | | - | 0 | 18 | 83 | 90 | 0 | 82 | 99 | 80 |
| | 4 | | - | 0 | 35 | 97 | 91 | 0 | 93 | 97 | 88 |
| PROSULFOCARB | 0.25 | COMPOUND A | 167 | 0 | 0 | 31 | 80 | 0 | 46 | 10 | 28 |
| | 0.5 | | 167 | 0 | 0 | 48 | 86 | 0 | 68 | 46 | 39 |
| | 1 | | 167 | 3 | 6 | 83 | 90 | 0 | 86 | 69 | 75 |
| | 2 | | 167 | 0 | 35 | 98 | 91 | 0 | 95 | 89 | 87 |
| | 4 | | 167 | 0 | 80 | 100 | 98 | 0 | 98 | 97 | 95 |
| | - | | 167 | 0 | 0 | 0 | 3 | 0 | 3 | 4 | 0 |

## Claims

1. A herbicidal preparation comprising a thiocarbamate selected from prosulfocarb, cycloate, vernolate, molinate, thiobencarb, butylate, EPTC, tri-allate, di-allate, esprocarb and tiocarbazil in combination with the compound (E)-methyl 2-[2-(6-(2-cyanophenoxy)pyrimidin-4-yloxy)phenyl]-3-methoxypropenoate.

2. A preparation according to claim 1, wherein the thiocarbamate is prosulfocarb.

3. A herbicidal composition comprising a thiocarbamate selected from prosulfocarb, cycloate, vernolate, molinate, thiobencarb, butylate, EPTC, tri-allate, di-allate, esprocarb and tiocarbazil, the compound (E)-methyl 2-[2-(6-(2-cyanophenoxy)pyrimidin-4-yloxy)phenyl]-3-methoxypropenoate and a solid or liquid diluent.

4. A herbicidal composition according to claim 3, wherein the ratio of thiocarbamate to (E)-methyl 2-[2-(6-(2-cyanophenoxy)pyrimidin-4-yloxy)phenyl]-3-methoxypropenoate is in the range of from 10:1 to 1:1.

5. A process for inhibiting the growth of unwanted plants, by applying to the plants, or to the locus thereof, a thiocarbamate selected from prosulfocarb, cycloate, vernolate, molinate, thiobencarb, butylate, EPTC, tri-allate, di-allate, esprocarb and tiocarbazil, and the compound (E)-methyl 2-[2-(6-(2-cyanophenoxy)pyrimidin-4-yloxy)-phenyl]-3-methoxypropenoate.

6. A two pack-container having a first compartment containing a composition comprising a thiocarbamate selected from prosulfocarb, cycloate, vernolate, molinate, thiobencarb, butylate, EPTC, tri-allate, di-allate, esprocarb and tiocarbazil, in combination with a solid or liquid diluent and a second compartment containing a composition comprising the compound (E)-methyl 2-[2-(6-(2-cyanophenoxy)pyrimidin-4-yloxy)-phenyl]-3-methoxypropenoate, in combination with a solid or liquid diluent.

## Patentansprüche

1. Herbizid-Zubereitung, umfassend ein Thiocarbamat ausgewählt aus Prosulfocarb, Cycloat, Vernolat, Molinat, Thiobencarb, Butylat, EPTC, Tri-allat, Di-allat, Espocarb und Tiocarbazil, in Kombination mit der Verbindung (E)-Methyl-2-[2-(6-(2-Cyanophenoxy)pyrimidin-4-yloxy)phenyl]-3-methoxypropenoat.

2. Zubereitung gemäß Anspruch 1, in der das Thiocarbamat Prosulfocarb ist.

3. Herbizid-Zusammensetzung, umfassend ein Thiocarbamat ausgewählt aus Prosulfocarb, Cycloat, Vernolat, Molinat, Thiobencarb, Butylat, EPTC, Tri-allat, Di-allat, Espocarb und Tiocarbazil, die Verbindung (E)-Methyl-2-[2-(6-(2-Cyanophenoxy)pyrimidin-4-yloxy)phenyl]-3-methoxypropenoat und ein festes oder flüssiges Verdünnungsmittel.

4. Herbizid-Zusammensetzung gemäß Anspruch 3, bei dem das Verhältnis von Thiocarbamat zu (E)-Methyl-2-[2-(6-(2-Cyanophenoxy)pyrimidin-4-yloxy)phenyl]-3-methoxypropenoat im Bereich von 10:1 bis 1:1 liegt.

5. Verfahren zur Inhibierung des Wachstums von unerwünschten Pflanzen durch Aufbringen eines Thiocarbamats, ausgewählt aus Prosulfocarb, Cycloat, Vernolat, Molinat, Thiobencarb, Butylat, EPTC, Tri-allat, Di-allat, Espocarb und Tiocarbazil, und der Verbindung (E)-Methyl-2-[2-(6-(2-Cyanophenoxy)pyrimidin-4-yloxy)phenyl]-3-methoxypropenoat auf die Pflanzen oder ihren Ort.

6. Zwei-Pack-Behälter mit einem ersten Kompartment, das eine Zusammensetzung mit einem Thiocarbamat ausgewählt aus Prosulfocarb, Cycloat, Vernolat, Molinat, Thiobencarb, Butylat, EPTC, Tri-allat, Di-allat, Espocarb und Tiocarbazil in Kombination mit einem festen oder flüssigen Verdünnungsmittel enthält, und einem zweiten Kompartment, das eine Zusammensetzung mit der Verbindung (E)-Methyl-2-[2-(6-(2-Cyanophenoxy)pyrimidin-4-yloxy)phenyl]-3-methoxypropenoat in Kombination mit einem festen oder flüssigen Verdünnungsmittel enthält.

## Revendications

1. Préparation herbicide comprenant un thiocarbamate choisi parmi le prosulfocarb, le cycloate, le vernolate, le molinate, le thiobencarb, le butylate, l'EPTC, le tri-allate, le di-allate, l'esprocarb et le tiocarbazil en combinaison avec le composé (E)-méthyle 2-[2-(6-(2-cyanophénoxy)-pyrimidin-4-yloxy)phényl]-3-méthoxypropénoate.

2. Préparation selon la revendication 1, dans laquelle le thiocarbamate est le prosulfocarb.

3. Composition herbicide comprenant un thiocarbamate choisi parmi le prosulfocarb, le cycloate, le vernolate, le molinate, le thiobencarb, le butylate, l'EPTC, le tri-allate, le di-allate, l'esprocarb et le tiocarbazil le composé (E)-méthyle 2-[2-(6-(2-cyanophénoxy)-pyrimidin-4-yloxy)-phényl]-3-méthoxypropénoate et un diluant solide ou liquide.

4. Composition herbicide selon la revendication 3, dans laquelle le rapport entre le thiocarbamate et le (E)-méthyle 2-[2-(6-(2-cyanophénoxy)-pyrimidin-4-yloxy)phényl]-3-méthoxypropénoate est dans l'intervalle compris entre 10/1 et 1/1.

5. Procédé d'inhibition de la croissance de plantes indésirables par application aux plantes ou à leurs sites, d'un thiocarbamate choisi parmi le prosulfocarb, le cycloate, le vernolate, le molinate, le thiobencarb, le butylate, l'EPTC, le tri-allate, le di-allate, l'esprocarb et le tiocarbazil et le composé (E)-méthyle 2-[2-(6-(2-cyanophénoxy)pyrimidin-4-yloxy)phényl]-3-méthoxypropénoate.

6. Container à deux places ayant un premier compartiment contenant une composition comprenant un thiocarbamate choisi parmi le prosulfocarb, le cycloate, le vernolate, le molinate, le thiobencarb, le butylate, l'EPTC, le tri-allate, le di-allate, l'esprocarb et le tiocarbazil en combinaison avec un diluant solide ou liquide, et un second compartiment contenant une composition comprenant le composé (E)-méthyle 2-[2-(6-(2-cyanophénoxy)pyrimidin-4-yloxy)phényl]-3-méthoxypropénoate en combinaison avec un diluant solide ou liquide.
